# FASCICULE DE BREVET EUROPEEN

(11) **EP 3 179 189 B1**
(45) Date de publication et mention de la délivrance du brevet: **05.09.2018**
(21) Numéro de dépôt: 16306492.6
(22) Date de dépôt: 15.11.2016
(51) Int. Cl.: F28C 3/16, F02C 6/16, F28D 13/00, F28D 20/00, F28D 20/02

(54) **SYSTEME ET PROCEDE D'ECHANGE DE CHALEUR A COURANT-CROISE ENTRE UN FLUIDE ET DES PARTICULES DE STOCKAGE DE CHALEUR**
SYSTEM UND VERFAHREN ZUM KREUZSTROM-WÄRMEAUSTAUSCH ZWISCHEN EINEM FLUID UND WÄRMESPEICHERTEILCHEN
SYSTEM AND METHOD FOR CROSS-CURRENT HEAT EXCHANGE BETWEEN A FLUID AND HEAT-STORAGE PARTICLES

(30) Priorité: 07.12.2015 FR 1561932
(43) Date de publication de la demande: 14.06.2017
(73) Titulaire: IFP Energies nouvelles, 92500 Rueil-Malmaison (FR)
(72) Inventeur: PLAIS, Cecile, 69420 LES HAIES (FR); SANZ, Elena, 69005 LYON (FR); NASTOLL, Willi, 69007 LYON (FR)

(56) Documents cités:
- WO-A1-2015/150104
- WO-A2-2011/135501
- DE-A1- 3 035 386
- FR-A1- 3 004 245
- JP-A- S5 432 863

## Description

La présente invention concerne le domaine des systèmes d'échange de chaleur, en particulier pour le stockage de la chaleur dans un système ou un procédé de type AA-CAES (de l'anglais « Advanced Adiabatic - Compressed Air Energy Storage »). En particulier, l'invention concerne un système tel que défini au préambule de la revendication 1 et un procédé tel que défini en revendication 14. Un système correspondant au préambule de la revendication 1 est connu du document JP S54 32863 A. Dans un système de stockage d'énergie par air comprimé (CAES), l'énergie, que l'on souhaite utiliser à un autre moment, est stockée sous forme d'air comprimé. Pour le stockage, une énergie, notamment électrique, entraîne des compresseurs d'air, et pour le déstockage, l'air comprimé entraîne des turbines, qui peuvent être reliées à une génératrice électrique. Le rendement de cette solution n'est pas optimal car une partie de l'énergie de l'air comprimé se retrouve sous forme de chaleur qui n'est pas utilisée. En effet, dans les procédés CAES, on n'utilise que l'énergie mécanique de l'air, c'est-à-dire qu'on rejette toute la chaleur produite lors de la compression. A titre d'exemple, de l'air comprimé à 8 MPa (80 bar) se réchauffe pendant la compression jusqu'à environ 150°C, mais il est refroidi avant le stockage. De plus, le rendement d'un système CAES n'est pas optimal, car ensuite le système nécessite de chauffer l'air stocké pour réaliser la détente de l'air. En effet, si l'air est stocké à 8 MPa (80 bar) et à température ambiante et si l'on désire récupérer l'énergie par une détente, la décompression de l'air suit à nouveau une courbe isentropique, mais cette fois à partir des conditions initiales de stockage (environ 8 MPa et 300 K). L'air se refroidit donc jusqu'à des températures non réalistes (83 K soit -191°C). Il est donc nécessaire de le réchauffer, ce qui peut se faire à l'aide d'un brûleur à gaz, ou autre carburant.

Plusieurs variantes existent actuellement à ce système. On peut citer notamment les systèmes et procédés :
- ACAES (de l'anglais « Adiabatic Compressed Air Energy Storage ») dans lequel l'air est stocké à haute température due à la compression. Toutefois, ce type de système nécessite un système de stockage spécifique, volumineux et coûteux (stockage adiabatique).
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le TES est utilisée pour chauffer l'air avant sa détente. Selon certaines conceptions envisagées, la chaleur est stockée dans le système de stockage au moyen de particules solides.

Par ailleurs, de tels systèmes d'échange de chaleur sont utilisés dans d'autres domaines : le stockage de l'énergie solaire, marine, dans les procédés de métallurgie, etc.

Un des critères de design des systèmes d'échange et de stockage de chaleur est leur capacité à contrôler la stratification thermique (ou thermocline) des faibles températures vers des températures élevées. En effet, le rendement et l'efficacité de stockage de la chaleur en dépendent.

Dans ce but, plusieurs types de système d'échange de chaleur ont été développés. Certains types de système d'échange de chaleur concernent un lit fixe de particules solides, ou des échanges thermiques de fluides circulant à co-courant. Cependant, ces échanges de chaleur ne sont pas optimaux en termes d'efficacité.

Par exemple, les demandes de brevet WO 2011/027309 et WO 2011/135501 décrivent des systèmes de stockage de la chaleur comprenant des particules solides sous forme de lit fluidisé. Toutefois, pour ces solutions, les échanges de chaleur entre le fluide et les particules solides se font indirectement au moyen d'un échangeur de chaleur plongé dans le lit fluidisé. Ainsi, l'efficacité de l'échange de chaleur entre le fluide de stockage et les particules solides n'est pas optimale, notamment car l'échange de chaleur est indirect, et car toutes les particules ne sont pas en contact avec le fluide de stockage.

De plus, la demande de brevet FR 3004245 propose plusieurs configurations d'un système d'échange de chaleur thermique faisant appel à la fluidisation des particules au moyen de réactions thermochimiques. Toutefois, cette solution nécessite également un échangeur de chaleur traversant le lit fluidisé, ce qui ne permet pas une optimisation de l'échange de chaleur, notamment car l'échange est indirect, et car toutes les particules ne sont pas en contact avec le fluide.

Pour pallier ces inconvénients, la présente invention concerne un système d'échange de chaleur entre un fluide et des particules de stockage de chaleur. Le système d'échange comporte une zone d'échange, dans laquelle le fluide et les particules de stockage de chaleur (sous forme de lit fluidisé) s'écoulent à contre-courant et courant-croisé. Cet écoulement à contre-courant et à courant-croisé permet une efficacité élevée de l'échange de chaleur entre le fluide et les particules.

### Le système et le procédé selon l'invention

L'invention concerne un système d'échange de chaleur entre un fluide et des particules de stockage de chaleur comprenant au moins une zone d'échange de chaleur dans laquelle s'écoulent ledit fluide et un lit fluidisé comprenant lesdites particules de stockage de chaleur. Ledit système d'échange de chaleur comporte des moyens de circulation dudit fluide configurés pour former une circulation à courant-croisé dudit fluide par rapport audit lit fluidisé dans ladite zone d'échange de chaleur et pour former une circulation dudit fluide de la sortie vers l'entrée dudit lit fluidisé dans ladite zone d'échange de chaleur.

Selon un mode de réalisation de l'invention lesdits moyens de circulation dudit fluide comportent des moyens d'injection et des moyens de soutirage dudit fluide aptes à faire circuler ledit fluide selon une direction sensiblement perpendiculaire à la circulation dudit lit fluidisé.

Avantageusement, lesdits moyens de circulation comprennent une pluralité de moyens d'injection et de moyens de soutirage dudit fluide associés de manière à ce que ledit fluide circule consécutivement dans chaque moyen d'injection et de soutirage, lesdits moyens d'injection et lesdits moyens de soutirage étant disposés consécutivement le long de ladite zone d'échange de chaleur, ledit fluide en provenance d'un moyen de soutirage étant introduit dans ladite zone d'échange par un moyen d'injection situé en amont par rapport à la circulation dudit lit fluidisé.

De préférence, ladite zone d'échange de chaleur est formée au sein d'une conduite.

Selon une variante, ledit lit fluidisé s'écoule par gravité dans ladite zone d'échange de chaleur.

De manière préférée, ladite zone d'échange de chaleur est inclinée par rapport à l'horizontale.

Selon une conception de l'invention, lesdites particules comprennent des matériaux à changement de phase.

Conformément à une caractéristique de l'invention, ledit fluide circule selon une trajectoire sensiblement ascendante.

De manière avantageuse, ledit fluide est un gaz, notamment de l'air.

Conformément à un mode de réalisation, ledit système d'échange de chaleur comporte au moins deux réservoirs de stockage desdites particules de stockage de chaleur, au moins une zone d'échange de chaleur étant disposée entre lesdits réservoirs.

Selon une variante de ce mode de réalisation, ledit système d'échange de chaleur comporte un premier réservoir de stockage desdites particules, un deuxième réservoir de stockage desdites particules, au moins une première zone d'échange de chaleur étant formée entre lesdits premier et deuxième réservoirs, et un troisième réservoir de stockage desdites particules, au moins une deuxième zone d'échange de chaleur étant formée entre lesdits deuxième et troisième réservoirs.

Avantageusement, ledit système comporte des moyens de transport desdites particules de stockage de chaleur dudit troisième réservoir vers ledit premier réservoir.

En outre, l'invention concerne un système de stockage et de récupération d'énergie par gaz comprimé comportant au moins un moyen de compression de gaz, au moins un moyen de stockage dudit gaz comprimé, au moins un moyen de détente dudit gaz comprimé pour générer une énergie, caractérisé en ce que ledit système de stockage et de récupération d'énergie par gaz comprimé comporte au moins un système d'échange de chaleur selon l'une des caractéristiques précédentes.

De plus, l'invention concerne un procédé d'échange de chaleur entre un fluide et des particules de stockage de chaleur, dans lequel on réalise les étapes suivantes pour ledit échange de chaleur :
a) on fait circuler un lit fluidisé comprenant lesdites particules de stockage de chaleur dans une zone d'échange de chaleur ; et
b) on fait circuler ledit fluide dans ladite zone d'échange de chaleur à courant-croisé par rapport audit lit fluidisé, depuis la sortie vers l'entrée dudit lit fluidisé dans ladite zone d'échange de chaleur.

De manière avantageuse, on fait circuler ledit lit fluidisé dans ladite zone d'échange de chaleur par gravité.

Selon un mode de réalisation de l'invention, on fait circuler ledit fluide selon une direction sensiblement perpendiculaire à la direction de circulation dudit lit fluidisé.

Selon une variante, on stocke lesdites particules de stockage de chaleur dans un premier réservoir avant ledit échange de chaleur, et on stocke lesdites particules de stockage de chaleur dans un deuxième réservoir après ledit échange de chaleur.

De préférence, on réalise les étapes suivantes :
c) on stocke lesdites particules de stockage de chaleur dans un premier réservoir ;
a) on réalise ledit échange de chaleur entre lesdites particules stockées dans ledit premier réservoir avec un fluide ;
b) on stocke lesdites particules, en sortie de l'échange de chaleur, dans un deuxième réservoir ;
c) on réalise ledit échange de chaleur entre lesdites particules stockées dans le deuxième réservoir avec un fluide ; et
d) on stocke lesdites particules, en sortie de l'échange de chaleur, dans ledit premier réservoir ou dans un troisième réservoir.

De manière préférée, on transporte lesdites particules de stockage de chaleur dudit troisième réservoir vers ledit premier réservoir.

L'invention concerne également un procédé de stockage et de récupération d'énergie par gaz comprimé, dans lequel on réalise les étapes suivantes :
a) on comprime un gaz ;
b) on refroidit ledit gaz comprimé par échange de chaleur dans un système d'échange de chaleur selon l'une des caractéristiques précédentes ;
c) on stocke ledit gaz refroidi ;
d) on chauffe ledit gaz comprimé refroidi par restitution de la chaleur dans ledit système d'échange de chaleur ; et
e) on détend ledit gaz comprimé chauffé pour générer une énergie.

### Présentation succincte des figures

D'autres caractéristiques et avantages du système et du procédé selon l'invention, apparaîtront à la lecture de la description ci-après d'exemples non limitatifs de réalisations, en se référant aux figures annexées et décrites ci-après.
La figure 1a illustre, selon une vue longitudinale, un système d'échange de chaleur selon un mode de réalisation de l'invention.
La figure 1b illustre, selon une vue transversale, un système d'échange de chaleur selon un mode de réalisation de l'invention.
La figure 2 représente la température du fluide et des particules au sein d'un système d'échange de chaleur selon un mode de réalisation de l'invention.
La figure 3 représente un système de stockage de chaleur selon un mode de réalisation de l'invention.
La figure 4 illustre un système de stockage et de récupération d'énergie par gaz comprimé selon un mode de réalisation de l'invention.

### Description détaillée de l'invention

La présente invention concerne un système d'échange de chaleur entre un fluide et des particules de stockage de chaleur. Le système d'échange de chaleur comporte au moins une zone d'échange de chaleur, dans laquelle s'écoulent le fluide et un lit fluidisé. Le lit fluidisé comprend les particules de stockage de chaleur. Selon l'invention, le système d'échange de chaleur comporte des moyens de circulation du fluide configurés pour une circulation à courant-croisé du fluide par rapport au lit fluidisé, dans la zone d'échange de chaleur, et pour former une circulation du fluide de la sortie vers l'entrée du lit fluidisé dans ladite zone d'échange de chaleur. Pour simplifier, dans la suite de la description, la circulation du fluide depuis la sortie vers l'entrée du lit fluidisé dans la zone d'échange de chaleur est considérée comme une circulation dite à contre-courant, car, globalement le fluide a une trajectoire qui va dans le sens inverse du lit fluidisé. Toutefois, contrairement aux circulations à contre-courant classiques, le fluide et le lit fluidisé n'ont pas des trajectoires opposées de direction parallèles. La circulation à contre-courant et à courant-croisé du fluide et du lit fluidisé permet d'obtenir une efficacité élevée de l'échange de chaleur. Ainsi, il est possible d'optimiser la chaleur stockée dans les particules de stockage de la chaleur.

Les particules de stockage de la chaleur sont des éléments de petites dimensions (par exemple entre 0.02 et 1 mm) aptes à stocker de la chaleur.

Un lit fluidisé est constitué d'une phase solide composé de particules de petite taille et d'une phase fluide en écoulement. Par exemple, la phase fluide peut être gazeuse, sous forme d'air ou de gaz rare. La phase fluide peut être injectée à une extrémité de la zone d'échange de chaleur, à proximité de l'entrée (injection) des particules pour former le lit fluidisé.

Ladite circulation est dite à contre-courant, car le fluide entre dans la zone d'échange de chaleur du côté de la sortie du lit fluidisé, et le fluide sort du moyen d'échange de chaleur du côté de l'entrée du lit fluidisé. Selon une caractéristique de l'invention, le lit fluidisé peut avoir une trajectoire descendante, et le fluide peut avoir une trajectoire ascendante. Alternativement, le lit fluidisé peut avoir une trajectoire ascendante et le fluide peut avoir une trajectoire descendante.

L'écoulement est dit à courant-croisé, car la direction de l'écoulement du fluide n'est pas parallèle à l'écoulement du lit fluidisé : le fluide croise le lit fluidisé. Selon un mode de réalisation de l'invention, le fluide s'écoule selon une direction sensiblement perpendiculaire, par exemple entre 60 et 120°, de préférence entre 75 et 105°, à la direction d'écoulement du lit fluidisé.

Selon une variante de réalisation de l'invention, le système d'échange de chaleur selon l'invention peut comprendre des particules solides ou des particules, sous forme de capsules contenant un matériau à changement de phase (MCP). Ces matériaux permettent également une réduction du volume des éventuels moyens de stockage, car ils permettent de stocker une grande quantité d'énergie sous la forme de chaleur latente. Un compromis entre efficacité et coût peut également être trouvé en mélangeant des MCP et des matériaux de stockage, utilisant la chaleur sensible pour stocker la chaleur, dans le lit fluidisé. Parmi les matériaux à changement de phase, on peut utiliser les matériaux suivants : les paraffines, dont la température de fusion est inférieure à 130°C, les sels qui fondent à des températures supérieures à 300°C, des mélanges (eutectiques) qui permettent d'avoir une large gamme de température de fusion.

Les particules solides (qu'elles soient ou non à changement de phase) peuvent avoir toutes les formes connues des milieux granulaires classiques (billes, cylindres, extrudés, trilobes ...), ainsi que toute autre forme permettant de maximiser la surface d'échange avec le gaz. De préférence, les particules sont sous la forme de billes, de manière à limiter les problèmes d'attrition. La taille de particules peut varier entre 0.02 mm et 1 mm, de manière préférée entre 0.05 et 0.5 mm et de manière encore plus préférée entre 0.07 et 0.2 mm.

Conformément à une variante de réalisation de l'invention, le fluide peut être un gaz, notamment de l'air. Le fluide peut être un gaz à refroidir ou à chauffer par les particules dans la zone d'échange de chaleur.

Selon une mise en oeuvre de l'invention, les moyens de circulation du fluide, peuvent comprendre un ou plusieurs moyens d'injection et de soutirage du fluide dans la zone d'échange. Les moyens d'injection et de soutirage sont aptes à faire circuler le fluide selon une direction sensiblement perpendiculaire à la circulation du lit fluidisé.

Lorsque les moyens de circulation de fluide comportent une pluralités de moyens d'injection et de soutirage, ceux-ci peuvent être répartis tout le long de la zone d'échange. De préférence, dans ce cas, les moyens d'injection et de soutirage peuvent être associés de manière à ce que le fluide circule consécutivement dans tous les moyens d'injection et de soutirage. Ainsi, il est possible de favoriser les échanges de chaleur au moyen de plusieurs passages consécutifs du fluide dans le lit fluidisé.

Avantageusement, les moyens d'injection du fluide sont situés dans la partie inférieure de la zone d'échange, et les moyens de soutirage du fluide sont situés dans la partie supérieure de la zone d'échange. Ainsi, le fluide entre dans la partie inférieure de la zone d'échange, traverse la zone d'échange, en croisant le lit fluidisé, puis ressort dans la partie supérieure de la zone d'échange. De plus, le fluide qui pénètre dans les moyens de soutirage peuvent être reconduits dans les moyens d'injection adjacents par des moyens extérieurs à la zone de d'échange. Les moyens d'injection adjacents, dans lesquels le fluide est reconduit, sont les moyens d'injection situés en amont des précédents moyen d'injection dans le sens de circulation du lit fluidisé.

Selon un mode de réalisation de l'invention, la zone d'échange de chaleur est formée par une conduite, un canal, une colonne, ou tout moyen analogue. La conduite (ou canal) peut être de section circulaire, rectangulaire, elliptique, etc.

Selon une variante de réalisation de l'invention, l'écoulement du lit fluidisé peut être réalisé par la gravité. Ainsi, l'énergie nécessaire pour permettre l'écoulement du lit fluidisé est moindre. Dans ce cas, la zone d'échange de chaleur peut être inclinée par rapport à l'horizontale. De préférence, l'angle d'inclinaison de la zone d'échange par rapport à l'horizontale est compris entre 5 et 60°.

Selon une variante de réalisation de l'invention, plusieurs zones d'échange de chaleur sont placées en parallèle. Ainsi, il est possible de limiter la longueur des zones d'échange de chaleur, tout en favorisant l'échange de chaleur.

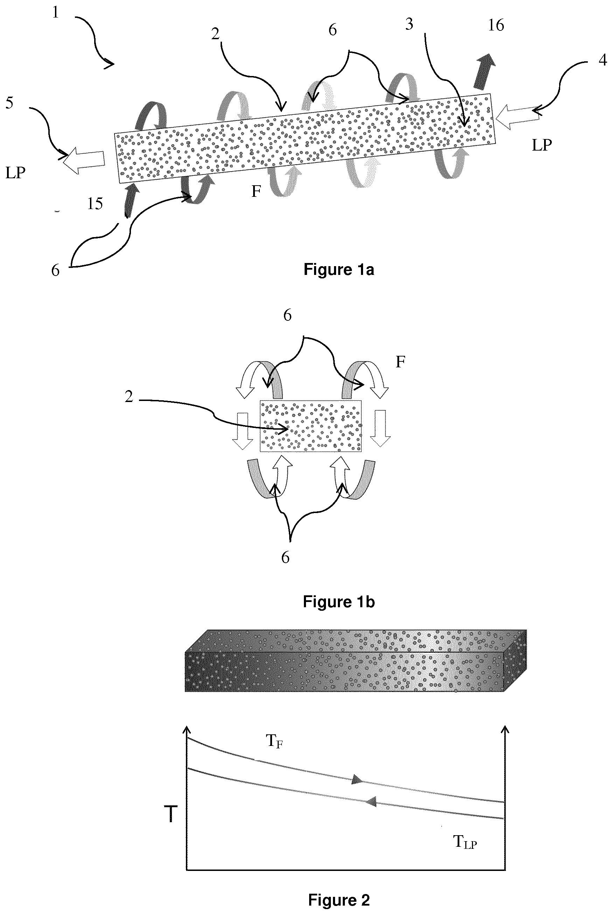

Les figures 1a et 1b illustrent, de manière non limitative, un système d'échange de chaleur 1 selon un mode de réalisation de l'invention. La figure 1a est une vue longitudinale du système d'échange de chaleur 1, et la figure 1b est une coupe transversale du système d'échange de chaleur. Le système d'échange de chaleur 1 comporte une conduite de section rectangulaire, et inclinée par rapport à l'horizontale. Le volume interne de la conduite forme une zone d'échange de chaleur 2. Dans la zone d'échange de chaleur 2, un lit fluidisé LP, comprenant des particules 3, circule par gravité depuis l'entrée 4, située du côté le plus élevé de la conduite, vers la sortie 5, située du côté le moins élevé de la conduite. Le fluide F circule globalement du bas vers le haut depuis l'entrée 15 vers la sortie 16. Ainsi, le fluide s'écoule à contre-courant par rapport au lit fluidisé. De plus, le système d'échange de chaleur comporte une pluralité de moyens 6 d'injection et de soutirage 6 configurés pour faire circuler le fluide F selon une direction inclinée, sensiblement perpendiculaire, par rapport à la circulation du lit fluidisé LP. Le fluide traverse le lit fluidisé, et cherchant le chemin de moindre perte de charge ressort par le point de soutirage le plus proche dans la section supérieure de la conduite. Il est ensuite reconduit, dans des moyens extérieurs à la conduite vers la partie inférieure de la conduite, où il est réinjecté dans la zone d'échange de chaleur 2 par les moyens d'injection 6 adjacents situé en amont des précédents moyens d'injection dans le sens de circulation du lit fluidisé. Ainsi, dans un passage, le fluide s'écoule à courant-croisé par rapport au lit fluidisé, l'écoulement global dans l'ensemble de la conduite se faisant à contre-courant. Sur cette figure, les moyens de fluidisation des particules pour former le lit fluidisé ne sont pas représentés.

La figure 2 illustre schématiquement le profil thermique T le long de la zone d'échange de chaleur, pour un système d'échange de chaleur selon le mode de réalisation des figures 1a et 1b. Sur cette figure T_{F} correspond à la température du fluide, et T_{LP} correspond à la température du lit fluidisé au sein de la zone d'échange de chaleur. On remarque que le profil thermique est proche de celui d'un échangeur thermique à contre-courant. Ainsi, un maximum d'énergie est récupérée par les particules, diminuant ainsi l'approche thermique par rapport à un échange en co-courant.

Selon un mode de réalisation de l'invention (compatible avec toutes les variantes et toutes les combinaisons des variantes décrites précédemment), le système d'échange de chaleur peut comporter en outre au moins un réservoir de stockage des particules de stockage de la chaleur. Dans ce cas, la zone d'échange de chaleur peut être placée entre deux réservoirs. Selon une mise en oeuvre de cette configuration, un des réservoirs peut contenir des particules chaudes, et un autre des réservoirs peut contenir des particules froides. Grâce à ces réservoirs, il est donc possible de stocker la chaleur échangée entre le fluide et les particules. Entre deux réservoirs, plusieurs zones d'échange de chaleur peuvent être prévues en parallèle. Le fait que l'échange de chaleur n'ait pas lieu dans les réservoirs, permet d'avoir un volume de stockage des particules à température uniforme, ce qui est important pour l'efficacité du système. En effet, dans le réservoir, toutes les particules ont sensiblement une température constante.

Selon une conception de ce mode de réalisation, le système d'échange de chaleur peut comporter trois réservoirs et au moins deux zones d'échanges de chaleur. Pour cette configuration, une première zone d'échange peut être prévue entre un premier réservoir et un deuxième réservoir, et une deuxième zone d'échange peut être prévue entre le deuxième réservoir et un troisième réservoir.

Par exemple, le premier et le troisième réservoirs peuvent stocker des particules froides, et le deuxième réservoir peut stocker des particules chaudes. Ainsi, dans la première zone d'échange, le fluide est refroidi, et dans la deuxième zone d'échange le fluide est chauffé.

Alternativement, le premier et le troisième réservoirs peuvent stocker des particules chaudes, et le deuxième réservoir peut stocker des particules froides. Ainsi, dans la première zone d'échange, le fluide est chauffé, et dans la deuxième zone d'échange le fluide est refroidi.

Selon une variante de cette configuration, le système d'échange de chaleur peut comprendre des moyens de transport des particules du troisième réservoir vers le premier réservoir. Ces moyens de transport peuvent être pneumatiques, comprendre un système de vis sans fin, etc.

Les principaux avantages du système d'échange et de stockage de chaleur selon ce mode de réalisation sont :
- Les échanges thermiques entre le fluide caloporteur et les particules sont maximisés, et la taille du système est réduite en conséquence, grâce à deux facteurs :
   - Les échanges se font dans un régime de fluidisation du solide
   - Le profil thermique établi dans la zone d'échange de chaleur est proche de celui d'un échangeur à contre-courant.
- La température chaude et froide du système sont maintenues constantes. En effet, les particules chaudes et froides sont stockées à température uniforme dans des volumes isolés, ce qui permet de s'affranchir du problème du maintien du thermocline dans le réservoir, comme c'est le cas dans les systèmes de stockage de la chaleur en lit fixe (point chaud et point froid au sein d'un même réacteur).
- Par rapport à un système de stockage en lit fixe, il n'y a pas de risques liés à des mauvaises distributions du solide.
- Le système permet de la souplesse car les charges et décharges partielles sont facilitées. En effet, il est possible de couper à tout moment l'alimentation du solide dans la zone d'échange de chaleur et de ne chauffer/refroidir qu'une partie de ce dernier.

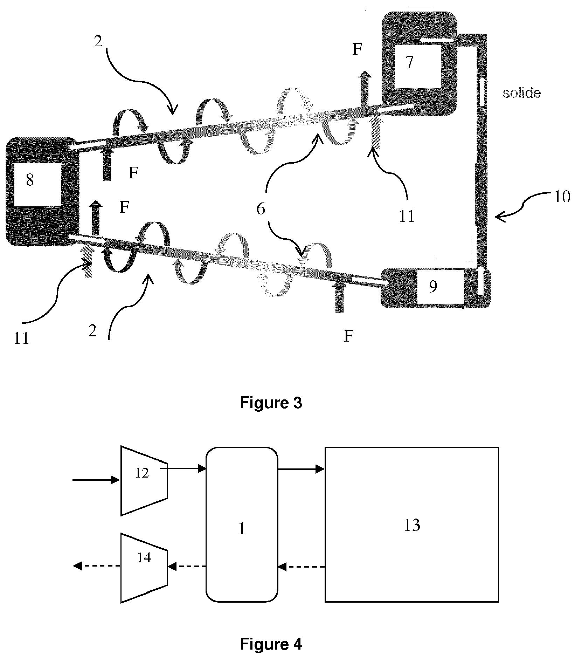

La figure 3 illustre, de manière non limitative, un système d'échange de chaleur selon un mode de réalisation de l'invention. Sur cette figure, la circulation des particules de stockage de chaleur est représenté par des flèches blanches, la circulation du fluide est représentée par des flèches grises, et la circulation du fluide de fluidisation est représentée par une flèche hachurée. Le système d'échange de chaleur comporte un premier réservoir 7 de stockage des particules de stockage de chaleur. Les particules du premier réservoir 7 sont déchargées dans une première zone d'échange 2, et sont fluidisées par des moyens de fluidisation 11. La zone d'échange 2 comprend au moins une conduite inclinée, qui peut être conforme à la zone d'échange de la figure 1a. Le fluide circule à contre-courant et courant-croisé dans la première zone d'échange de chaleur 2 par rapport à l'écoulement du lit fluidisé. En sortie de la première zone d'échange 2, les particules sont stockées dans le deuxième réservoir 8. Les particules du deuxième réservoir 8 sont déchargées dans une deuxième zone d'échange 2, et sont fluidisées par des moyens de fluidisation 11. La deuxième zone d'échange 2 comprend au moins une conduite inclinée et peut être conforme à la zone d'échange de la figure 1a. Le fluide circule à contre-courant et courant-croisé dans la deuxième zone d'échange de chaleur 2 par rapport à l'écoulement du lit fluidisé. En sortie de la deuxième zone d'échange 2, les particules sont stockées dans le troisième réservoir 9. Les particules du troisième réservoir 9 sont transportées par des moyens de transport 10 dans le premier réservoir 7. Les premier et troisième réservoirs 7 et 9 peuvent être des réservoirs de particules froides, et le deuxième réservoir 8 peut être un réservoir de particules chaudes. Dans ce cas, la première zone d'échange 2 permet le refroidissement du fluide, et la deuxième zone d'échange 2 permet le chauffage du fluide.

En outre, la présente invention concerne un système de stockage et de récupération d'énergie par gaz comprimé équipé d'un moyen de stockage de la chaleur (par exemple du type AACAES). Dans cette mise en oeuvre, le gaz sous pression (souvent de l'air) est stocké froid. Le système de stockage et de récupération d'énergie selon l'invention comporte :
- au moins un moyen de compression de gaz (ou compresseur), et de préférence plusieurs moyens de compression de gaz étagés. Le moyen de compression de gaz peut être entraîné par un moteur, notamment un moteur électrique ;
- au moins un moyen de stockage du gaz comprimé (appelé également réservoir) par le moyen de compression du gaz. Le moyen de stockage du gaz comprimé peut être un réservoir naturel (par exemple une cavité souterraine) ou non. Le moyen de stockage du gaz comprimé peut être en surface ou en sous-sol. De plus, il peut être formé d'un unique volume ou d'une pluralité de volumes connectés entre eux ou non ;
- au moins un moyen de détente du gaz (appelé également détendeur ou turbine), permettant de détendre le gaz comprimé et stocké, et de préférence plusieurs moyens de détente de gaz étagés. Le moyen de détente du gaz permet de générer une énergie, notamment une énergie électrique au moyen d'un générateur ;
- au moins un système d'échange de la chaleur, permettant le stockage de la chaleur issue du gaz comprimé lors de la phase de stockage d'énergie, et permettant la restitution de la chaleur stockée au gaz comprimé lors de la phase de la restitution d'énergie, le système d'échange de la chaleur est de préférence placé en sortie des moyens de compression et en entrée des moyens de détente. Selon l'invention, le système d'échange de la chaleur comprend des particules solides de stockage de la chaleur. Ces particules solides échangent de la chaleur avec le gaz lors des phases de stockage et de restitution d'énergie, cette chaleur étant stockée dans les particules entre ces deux phases. Selon l'invention, les systèmes de stockage de la chaleur sont conformes à l'une des variantes de réalisation décrites précédemment, ou à l'une des combinaisons des variantes précédemment décrites.

On utilise les termes « moyens de compression étagés » (respectivement « moyens de détente étagés »), lorsque une pluralité de moyens de compression (respectivement de détente) sont montés successivement les uns après les autres en série : le gaz comprimé (respectivement détendu) en sortie du premier moyen de compression (respectivement de détente) passe ensuite dans un deuxième moyen de compression (respectivement de détente) et ainsi de suite. On appelle alors un étage de compression ou de détente, un moyen de compression ou de détente de la pluralité de moyens de compression ou de détente étagés. Avantageusement, lorsque le système comporte une pluralité d'étages de compression et/ou de détente, un système d'échange de chaleur est disposé entre chaque étage de compression et/ou de détente. Ainsi, le gaz comprimé est refroidi entre chaque compression, ce qui permet d'optimiser le rendement de la compression suivante, et le gaz détendu est chauffé entre chaque détente, ce qui permet d'optimiser le rendement de la détente suivante. Le nombre d'étages de compression et le nombre d'étages de détente peuvent être compris entre 2 et 10, de préférence entre 3 et 5. De préférence, le nombre d'étages de compression est identique au nombre d'étages de détente. Alternativement, le système de stockage et de récupération d'énergie par gaz comprimé (par exemple de type AACAES) selon l'invention peut contenir un seul moyen de compression et un seul moyen de détente.

Selon une variante de réalisation de l'invention, les moyens de compression, étagés ou non, peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention.

Selon une variante de réalisation, les systèmes d'échange de chaleur utilisés entre les étages de compression peuvent être ceux utilisés entre les étages de détente.

Le système selon l'invention est adapté à tout type de gaz, notamment pour l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé, et son application AACAES seront décrites. Toutefois, le système et le procédé sont valables pour tout autre gaz.

La figure 4 illustre un exemple de réalisation non limitatif d'un système AACAES selon l'invention. Sur cette figure, les flèches en trait continu illustrent la circulation du gaz lors des étapes de compression (stockage d'énergie), et les flèches en pointillés illustrent la circulation du gaz lors des étapes de détente (restitution d'énergie). Cette figure illustre un système AACAES comprenant un seul étage de compression 12, un seul étage de détente 14 et un système d'échange de la chaleur 1. Le système comporte un réservoir de stockage 13 du gaz comprimé. Le système d'échange de la chaleur 1 est intercalé entre l'étage de compression/détente 12 ou 14 et le réservoir de stockage 13 du gaz comprimé. Classiquement, en phase de stockage d'énergie (compression), l'air est d'abord comprimé dans le compresseur 12, puis refroidi dans le système de stockage de la chaleur 1. Le gaz comprimé et refroidi est stocké dans le réservoir 13. Les particules de stockage de la chaleur du système de stockage de la chaleur 1 sont chaudes suite au refroidissement du gaz comprimé dans la phase de compression. Lors de la récupération de l'énergie (détente), le gaz comprimé stocké est chauffé dans le système de stockage de la chaleur 1. Ensuite, de manière classique, le gaz passe au travers d'un ou plusieurs étages de détente 14 (un étage selon l'exemple illustré en figure 1).

Le système de stockage et de récupération d'énergie par gaz comprimé selon l'invention n'est pas limité à l'exemple de la figure 4. D'autres configurations peuvent être envisagées : un nombre différent d'étages de compression et/ou de détente, l'utilisation de moyens réversibles assurant la compression et la détente, etc.

Le système d'échange de chaleur selon l'invention comprenant au moins un réservoir et au moins une zone d'échange de chaleur est particulièrement adaptée au système de stockage et de récupération d'énergie par gaz comprimé, notamment le mode de réalisation illustré en figure 3. En effet, un réservoir permet de stocker les particules chaudes après l'échange de chaleur dans la zone d'échange pendant la phase de stockage de l'énergie, et permet de libérer les particules chaudes pour l'échange de chaleur dans la zone d'échange pour la phase de restitution de l'énergie.

Alternativement, le système d'échange de chaleur selon l'invention peut être utilisé pour tout type d'utilisation nécessitant le stockage de la chaleur, notamment pour le stockage d'énergie solaire, éolienne, ou pour tout type d'industrie y compris la métallurgie, etc.

En outre, la présente invention concerne un procédé d'échange de chaleur entre un fluide et des particules de stockage de chaleur. Pour ce procédé, on peut réaliser les étapes suivantes :
a) on fait circuler un lit fluidisé comprenant les particules de stockage de la chaleur dans une zone d'échange de chaleur ; et
b) on fait circuler le fluide dans la zone d'échange de chaleur à courant-croisé par rapport au lit fluidisé, depuis la sortie vers l'entrée du lit fluidisé dans la zone d'échange de chaleur (c'est-à-dire selon une direction globalement à contre-courant du lit fluidisé).

La circulation à courant-croisé et globalement en sens inverse (le fluide s'écoulant depuis la sortie vers l'entrée du lit fluidisé dans la zone d'échange de chaleur) permet d'obtenir une efficacité élevée de l'échange de chaleur.

Le procédé d'échange de chaleur peut être réalisé au moyen du système d'échange de chaleur selon l'invention.

Le fluide peut être un gaz, notamment de l'air.

Selon une mise en oeuvre de l'invention, on peut faire circuler le fluide dans la zone d'échange de chaleur par plusieurs passages consécutifs, chaque passage étant réalisé dans une portion de la zone d'échange de chaleur. Cette mise en oeuvre peut être conforme au fonctionnement du système illustré aux figures 1a et 1b.

Selon un mode de réalisation de l'invention, on peut faire circuler le lit fluidisé selon une trajectoire descendante, et le fluide selon une trajectoire ascendante. De préférence, on peut faire circuler le lit fluidisé dans la zone d'échange de chaleur par gravité, de manière préférée au moyen d'une zone d'échange de chaleur inclinée par rapport à l'horizontale.

Selon un mode de réalisation, on peut stocker les particules de stockage de chaleur dans un premier réservoir avant l'échange de chaleur, et on peut stocker les particules de stockage de chaleur après l'étape d'échange de chaleur. Ainsi, il est possible de stocker la chaleur échangée.

Conformément à une configuration de ce mode de réalisation, on peut mettre en oeuvre les étapes suivantes :
a) on stocke les particules dans un premier réservoir ;
b) on réalise l'échange de chaleur entre un lit fluidisé comprenant les particules stockées dans le premier réservoir et un fluide ;
c) on stocke les particules, en sortie de l'échange de chaleur, dans un deuxième réservoir ;
d) on réalise l'échange de chaleur entre un lit fluidisé comprenant les particules stockées dans le deuxième réservoir et un fluide ; et
e) on stocke les particules, en sortie de l'échange de chaleur, dans le premier réservoir ou dans un troisième réservoir.

Dans le cas où on stocke les particules dans un troisième réservoir, le procédé peut comprendre une étape additionnelle de transport des particules du troisième réservoir vers le deuxième réservoir.

La présente invention concerne également un procédé de stockage et de récupération par gaz comprimé, dans lequel on réalise les étapes suivantes :
a) on comprime un gaz, notamment au moyen d'un compresseur ;
b) on refroidit le gaz comprimé par échange de chaleur, dans un système d'échange de chaleur selon l'invention ;
c) on stocke le gaz comprimé refroidi, notamment par un moyen de stockage de gaz comprimé ;
d) on chauffe le gaz comprimé stocké, par échange de chaleur, dans le système d'échange de chaleur selon l'invention ; et
e) on détend le gaz comprimé chauffé pour générer une énergie, par exemple au moyen d'une turbine pour générer une énergie électrique.

Selon l'invention, l'échange de chaleur entre le gaz et les particules est réalisée dans une zone d'échange de chaleur avec un écoulement du fluide à contre-courant et à courant-croisé par rapport au lit fluidisé qui comporte les particules. Ainsi, le stockage et la restitution d'énergie du procédé de type AACAES sont optimisés.

Selon un aspect de l'invention, le procédé comporte plusieurs étapes de compression successives, au moyen de compresseurs placés en série, également appelés compressions étagées. Dans ce cas, on réitère les étapes a) et b) pour chaque étage de compression. Ainsi, le gaz est comprimé et refroidi plusieurs fois.

Selon une caractéristique de l'invention, le procédé comporte plusieurs étapes de détente successives, par des moyens de détente placés en série, également appelés détentes étagées. Dans ce cas, on réitère les étapes d) et e) pour chaque étage de détente. Ainsi, le gaz est chauffé et détendu plusieurs fois.

L'étape a) concerne la compression d'un gaz, par exemple de l'air. Il peut s'agit notamment d'air prélevé dans le milieu ambiant.

L'étape b) permet de refroidir le gaz comprimé après chaque étape de compression, ce qui permet d'optimiser le rendement de la compression suivante et/ou le stockage d'énergie. Les moyens de stockage de la chaleur permettent, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C, par exemple environ 50 °C.

L'étape c) peut être réalisée au sein d'un moyen de stockage du gaz comprimé, qui peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non. Lors du stockage, on ferme le moyen de stockage du gaz comprimé.

Le gaz comprimé est stocké jusqu'au moment où on souhaite récupérer l'énergie stockée. L'étape d) et les suivantes sont réalisées au moment où on souhaite récupérer l'énergie stockée.

L'étape d) permet de chauffer l'air comprimé avant chaque détente, ce qui permet d'optimiser le rendement de la détente suivante. Pour l'étape d), on peut utiliser les particules de stockage de la chaleur qui ont servi à refroidir lors de l'étape b). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C, par exemple environ 180 °C.

Lors de l'étape e), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le procédé et le système de stockage et récupération d'énergie par gaz comprimé selon l'invention peuvent être utilisés pour le stockage d'une énergie intermittente, telle que l'énergie éolienne ou solaire, afin de pouvoir utiliser cette énergie au moment désiré.

## Revendications

1. Système d'échange de chaleur entre un fluide (F) et des particules de stockage de chaleur (3) comprenant au moins une zone d'échange de chaleur (2) dans laquelle s'écoulent ledit fluide (F) et un lit fluidisé (LP) comprenant lesdites particules de stockage de chaleur (3), **caractérisé en ce que** ledit système d'échange de chaleur (1) comporte des moyens de circulation dudit fluide configurés pour former une circulation à courant-croisé dudit fluide (F) par rapport audit lit fluidisé (LP) dans ladite zone d'échange de chaleur (2) et pour former une circulation dudit fluide (F) de la sortie vers l'entrée dudit lit fluidisé (LP) dans ladite zone d'échange de chaleur (2).

2. Système selon la revendication 1, dans lequel lesdits moyens de circulation (6) dudit fluide (F) comportent des moyens d'injection et des moyens de soutirage (6) dudit fluide aptes à faire circuler ledit fluide (F) selon une direction sensiblement perpendiculaire à la circulation dudit lit fluidisé (LP).

3. Système selon la revendication 2, dans lequel lesdits moyens de circulation comprennent une pluralité de moyens d'injection et de moyens de soutirage (6) dudit fluide associés de manière à ce que ledit fluide (F) circule consécutivement dans chaque moyen d'injection et de soutirage (6), lesdits moyens d'injection et lesdits moyens de soutirage (6) étant disposés consécutivement le long de ladite zone d'échange de chaleur (2), ledit fluide (F) en provenance d'un moyen de soutirage étant introduit dans ladite zone d'échange (2) par un moyen d'injection situé en amont par rapport à la circulation dudit lit fluidisé (LP).

4. Système selon l'une des revendications précédentes, dans lequel ladite zone d'échange de chaleur (2) est formée au sein d'une conduite.

5. Système selon l'une des revendications précédentes, dans lequel ledit lit fluidisé s'écoule par gravité dans ladite zone d'échange de chaleur (2).

6. Système selon la revendication 5, dans lequel ladite zone d'échange de chaleur (2) est inclinée par rapport à l'horizontale.

7. Système selon l'une des revendications précédentes, dans lequel lesdites particules comprennent des matériaux à changement de phase.

8. Système selon l'une des revendications précédentes, dans lequel ledit fluide (F) circule selon une trajectoire sensiblement ascendante.

9. Système selon l'une des revendications précédentes, dans lequel ledit fluide (F) est un gaz, notamment de l'air.

10. Système selon l'une des revendications précédentes, dans lequel ledit système d'échange de chaleur (1) comporte au moins deux réservoirs (7, 8, 9) de stockage desdites particules de stockage de chaleur (3), au moins une zone d'échange (2) de chaleur étant disposée entre lesdits réservoirs (7, 8, 9).

11. Système selon la revendication 10, dans lequel ledit système d'échange de chaleur comporte un premier réservoir (7) de stockage desdites particules (3), un deuxième réservoir de stockage (8) desdites particules (3), au moins une première zone d'échange de chaleur (2) étant formée entre lesdits premier et deuxième réservoirs (7, 8), et un troisième réservoir (9) de stockage desdites particules (3), au moins une deuxième zone d'échange de chaleur (2) étant formée entre lesdits deuxième et troisième réservoirs (8, 9).

12. Système selon la revendication 11, dans lequel ledit système comporte des moyens de transport (10) desdites particules de stockage de chaleur (3) dudit troisième réservoir (9) vers ledit premier réservoir (7).

13. Système de stockage et de récupération d'énergie par gaz comprimé comportant au moins un moyen de compression de gaz (12), au moins un moyen de stockage dudit gaz comprimé (13), au moins un moyen de détente dudit gaz (14) comprimé pour générer une énergie, **caractérisé en ce que** ledit système de stockage et de récupération d'énergie par gaz comprimé comporte au moins un système d'échange de chaleur (1) selon l'une des revendications précédentes.

14. Procédé d'échange de chaleur entre un fluide (F) et des particules de stockage de chaleur (3), dans lequel on réalise les étapes suivantes pour ledit échange de chaleur :
a) on fait circuler un lit fluidisé (LP) comprenant lesdites particules de stockage de chaleur (3) dans une zone d'échange de chaleur (2) ; et
b) on fait circuler ledit fluide (F) dans ladite zone d'échange de chaleur (2) à courant-croisé par rapport audit lit fluidisé (LP), depuis la sortie vers l'entrée dudit lit fluidisé (LP) dans ladite zone d'échange de chaleur.

15. Procédé selon la revendication 14, dans lequel on fait circuler ledit lit fluidisé (LP) dans ladite zone d'échange de chaleur par gravité.

16. Procédé selon l'une des revendications 14 ou 15, dans lequel on fait circuler ledit fluide (F) selon une direction sensiblement perpendiculaire à la direction de circulation dudit lit fluidisé (LP).

17. Procédé selon l'une des revendications 14 à 16, dans lequel on stocke lesdites particules de stockage de chaleur (3) dans un premier réservoir (7 ; 8) avant ledit échange de chaleur, et on stocke lesdites particules de stockage de chaleur (3) dans un deuxième réservoir (8 ; 9) après ledit échange de chaleur.

18. Procédé selon la revendication 17, dans lequel on réalise les étapes suivantes :
a) on stocke lesdites particules de stockage de chaleur (3) dans un premier réservoir (7) ;
b) on réalise ledit échange de chaleur entre lesdites particules (3) stockées dans ledit premier réservoir (7) avec un fluide ;
c) on stocke lesdites particules (3), en sortie de l'échange de chaleur, dans un deuxième réservoir (8) ;
d) on réalise ledit échange de chaleur entre lesdites particules stockées (3) dans le deuxième réservoir avec un fluide ; et
e) on stocke lesdites particules (3), en sortie de l'échange de chaleur, dans ledit premier réservoir (7) ou dans un troisième réservoir (9).

19. Procédé selon la revendication 18, dans lequel on transporte lesdites particules de stockage de chaleur (3) dudit troisième réservoir (9) vers ledit premier réservoir (7).

20. Procédé de stockage et de récupération d'énergie par gaz comprimé, dans lequel on réalise les étapes suivantes :
a) on comprime un gaz ;
b) on refroidit ledit gaz comprimé par échange de chaleur dans un système d'échange de chaleur (1) selon l'une des revendications 1 à 12 ;
c) on stocke ledit gaz refroidi ;
d) on chauffe ledit gaz comprimé refroidi par restitution de la chaleur dans ledit système d'échange de chaleur (1) ; et
e) on détend ledit gaz comprimé chauffé pour générer une énergie.

## Patentansprüche

1. System zum Wärmeaustausch zwischen einem Fluid (F) und Wärmespeicherteilchen (3), umfassend mindestens eine Wärmeaustauschzone (2), in der das Fluid (F) und ein Fließbett (LP), das die Wärmespeicherteilchen (3) umfasst, fließen, **dadurch gekennzeichnet, dass** das Wärmeaustauschsystem (1) Einrichtungen zum Zirkulieren des Fluids umfasst, die eingerichtet sind, um eine Querstromzirkulation des Fluids (F) in Bezug auf das Fließbett (LP) in der Wärmeaustauschzone (2) zu bilden und um eine Zirkulation des Fluids (F) vom Ausgang zum Eingang des Fließbetts (LP) in der Wärmeaustauschzone (2) zu bilden.

2. System nach Anspruch 1, wobei die Einrichtungen zum Zirkulieren (6) des Fluids (F) Einrichtungen zum Einspritzen und Einrichtungen zum Entnehmen (6) des Fluids umfassen, die geeignet sind, das Fluid (F) in einer Richtung zirkulieren zu lassen, die im Wesentlichen senkrecht zur Zirkulation des Wirbelbetts (LP) ist.

3. System nach Anspruch 2, wobei die Zirkulationseinrichtungen mehrere Einrichtungen zum Einspritzen und Einrichtungen zum Entnehmen (6) des Fluids umfassen, die derart verbunden sind, dass das Fluid (F) nacheinander in jeder Einspritz- und Entnahmeeinrichtung (6) zirkuliert, wobei die Einrichtungen zum Einspritzen und die Einrichtungen zum Entnehmen (6) nacheinander entlang der Wärmeaustauschzone (2) angeordnet sind, wobei das Fluid (F) von einer Entnahmeeinrichtung kommend in die Austauschzone (2) durch eine Einspritzeinrichtung eingeführt wird, die in Bezug auf die Zirkulation des Fluidbetts (LP) stromaufwärts angeordnet ist.

4. System nach einem der vorhergehenden Ansprüche, wobei die Wärmeaustauschzone (2) in einem Rohr ausgebildet ist.

5. System nach einem der vorhergehenden Ansprüche, wobei das Fließbett durch Schwerkraft in die Wärmeaustauschzone (2) fließt.

6. System nach Anspruch 5, wobei die Wärmeaustauschzone (2) in Bezug auf die Horizontale geneigt ist.

7. System nach einem der vorhergehenden Ansprüche, wobei die Teilchen Phasenwechselmaterialien umfassen.

8. System nach einem der vorhergehenden Ansprüche, wobei das Fluid (F) in einer im Wesentlichen aufsteigenden Bahn zirkuliert.

9. System nach einem der vorhergehenden Ansprüche, wobei das Fluid (F) ein Gas, insbesondere Luft ist.

10. System nach einem der vorhergehenden Ansprüche, wobei das Wärmeaustauschsystem (1) mindestens zwei Tanks (7, 8, 9) zum Speichern der Wärmespeicherteilchen (3) umfasst, wobei mindestens eine Wärmeaustauschzone (2) zwischen den Tanks (7, 8, 9) angeordnet ist.

11. System nach Anspruch 10, wobei das Wärmeaustauschsystem einen ersten Tank (7) zum Speichern der Teilchen (3), einen zweiten Tank zum Speichern (8) der Teilchen (3), wobei mindestens eine erste Wärmeaustauschzone (2) zwischen dem ersten und dem zweiten Tank (7, 8) ausgebildet ist, und einen dritten Tank (9) zum Speichern der Teilchen (3), wobei mindestens eine zweite Wärmeaustauschzone (2) zwischen dem zweiten und dem dritten Tank (8, 9) ausgebildet ist, umfasst.

12. System nach Anspruch 11, wobei das System eine Einrichtung (10) zum Transportieren der Wärmespeicherteilchen (3) von dem dritten Tank (9) zu dem ersten Tank (7) umfasst.

13. System zum Speichern und Gewinnen von Energie durch verdichtetes Gas, umfassend mindestens eine Einrichtung zum Verdichten von Gas (12), mindestens eine Einrichtung zum Speichern des verdichteten Gases (13), mindestens eine Einrichtung zum Entspannen des verdichteten Gases (14), um eine Energie zu erzeugen, **dadurch gekennzeichnet, dass** das System zum Speichern und zum Gewinnen von Energie durch verdichtetes Gas mindestens ein Wärmeaustauschsystem (1) nach einem der vorhergehenden Ansprüche umfasst.

14. Verfahren zum Wärmeaustausch zwischen einem Fluid (F) und Wärmespeicherteilchen (3), wobei die folgenden Schritte für den Wärmeaustausch durchgeführt werden:
a) Zirkulieren eines Fluidbetts (LP), das die Wärmespeicherteilchen (3) umfasst, in einer Wärmeaustauschzone (2); und
b) Zirkulieren des Fluids (F) in der Querstromwärmeaustauschzone (2) in Bezug auf das Fließbett (LP) vom Ausgang zum Eingang des Fließbetts (LP) in der Wärmeaustauschzone.

15. Verfahren nach Anspruch 14, wobei das Fließbett (LP) in der Wärmeaustauschzone durch Schwerkraft zirkuliert wird.

16. Verfahren nach einem der Ansprüche 14 oder 15, wobei das Fluid (F) in einer Richtung zirkuliert wird, die im Wesentlichen senkrecht zur Richtung der Zirkulation des Fließbetts (LP) ist.

17. Verfahren nach einem der Ansprüche 14 bis 16, wobei die Wärmespeicherteilchen (3) vor dem Wärmeaustausch in einem ersten Tank (7; 8) gespeichert werden und wobei die Wärmespeicherteilchen (3) nach dem Wärmeaustausch in einem zweiten Tank (8; 9) gespeichert werden.

18. Verfahren nach Anspruch 17, wobei die folgenden Schritte durchgeführt werden:
a) Speichern der Wärmespeicherteilchen (3) in einem ersten Tank (7);
b) Durchführen des Wärmeaustauschs zwischen den Teilchen (3), die in dem ersten Tank (7) gespeichert sind, mit einem Fluid;
c) Speichern der Teilchen (3) am Ausgang des Wärmeaustauschs in einem zweiten Tank (8);
d) Durchführen des Wärmeaustauschs zwischen den Teilchen (3), die in dem zweiten Tank gespeichert sind, mit einem Fluid; und
e) Speichern der Teilchen (3) am Ausgang des Wärmeaustauschs in dem ersten Tank (7) oder in einem dritten Tank (9).

19. Verfahren nach Anspruch 18, wobei die Wärmespeicherteilchen (3) des dritten Tanks (9) zum ersten Tank (7) transportiert werden.

20. Verfahren zum Speichern und zum Gewinnen von Energie durch verdichtetes Gas, wobei die folgenden Schritte durchgeführt werden:
a) Verdichten eines Gases;
b) Abkühlen des verdichteten Gases durch Wärmeaustausch in einem Wärmeaustauschsystem (1) nach einem der Ansprüche 1 bis 12;
c) Speichern des abgekühlten Gases;
d) Erwärmen des abgekühlten verdichteten Gases durch Rückführen von Wärme in das Wärmeaustauschsystem (1); und
e) Entspannen des erwärmten verdichteten Gases zum Erzeugen von Energie.

## Claims

1. A system for the exchange of heat between a fluid (F) and heat storage particles (3), comprising at least one heat exchange zone (2) in which said fluid (F) flows, and a fluidized bed (LP) comprising said heat storage particles (3), **characterized in that** said heat exchange system (1) comprises means for moving said fluid configured in order to produce a cross-current movement of said fluid (F) with respect to said fluidized bed (LP) in said heat exchange zone (2) and to produce a movement of said fluid (F) from the outlet to the inlet of said fluidized bed (LP) in said heat exchange zone (2).

2. The system as claimed in claim 1, in which said means (6) for moving said fluid (F) comprise means for injecting and means for for withdrawing (6) said fluid which are capable of moving said fluid (F) in a direction substantially perpendicular to the movement of said fluidized bed (LP).

3. The system as claimed in claim 2, in which said movement means comprise a plurality of means for injecting and means for withdrawing said fluid (6)associated in a manner such that said fluid (F) moves consecutively in each means for injection and for withdrawal (6), said means for injection and said means for withdrawal (6) being disposed consecutively along said heat exchange zone (2), said fluid (F) from one withdrawal means being introduced into said exchange zone (2) via an injection means located upstream with respect to the movement of said fluidized bed (LP).

4. The system as claimed in one of the preceding claims, in which said heat exchange zone (2) is formed inside a conduit.

5. The system as claimed in one of the preceding claims, in which said fluidized bed flows under gravity in said heat exchange zone (2).

6. The system as claimed in claim 5, in which said heat exchange zone (2) is inclined with respect to the horizontal.

7. The system as claimed in one of the preceding claims, in which said particles comprise phase change materials.

8. The system as claimed in one of the preceding claims, in which said fluid (F) moves in accordance with a substantially ascending trajectory.

9. The system as claimed in one of the preceding claims, in which said fluid (F) is a gas, in particular air.

10. The system as claimed in one of the preceding claims, in which said heat exchange system (1) comprises at least two reservoirs (7, 8, 9) for storage of said heat storage particles (3), at least one heat exchange zone (2) being disposed between said reservoirs (7, 8, 9).

11. The system as claimed in claim 10, in which said heat exchange system comprises a first reservoir (7) for storage of said particles (3), a second reservoir (8) for storage of said particles (3), at least one first heat exchange zone (2) being formed between said first and second reservoirs (7, 8), and a third reservoir (9) for storage of said particles (3), at least one second heat exchange zone (2) being formed between said second and third reservoirs (8, 9).

12. The system as claimed in claim 11, in which said system comprises means (10) for transport of said heat storage particles (3) from said third reservoir (9) to said first reservoir (7).

13. A compressed air energy storage and recovery system, comprising at least one gas compression means (12), at least one means for storage of said compressed gas (13), at least one means (14) for decompressing said compressed gas in order to generate energy, **characterized in that** said compressed air energy storage and recovery system comprises at least one heat exchange system (1) as claimed in one of the preceding claims.

14. A process for exchanging heat between a fluid (F) and heat storage particles (3), in which the following steps are carried out for said heat exchange:
a) a fluidized bed (LP) comprising said heat storage particles (3) is moved in a heat exchange zone (2); and
b) said fluid (F) is moved in said heat exchange zone (2) as a cross-current with respect to said fluidized bed (LP), from the outlet to the inlet of said fluidized bed (LP) in said heat exchange zone.

15. The process as claimed in claim 14, in which said fluidized bed (LP) is moved in said heat exchange zone under gravity.

16. The process as claimed in claim 14 or claim 15, in which said fluid (F) is moved in a direction which is substantially perpendicular to the direction of movement of said fluidized bed (LP).

17. The process as claimed in one of claims 14 to 16, in which said heat storage particles (3) are stored in a first reservoir (7; 8) before said heat exchange, and said heat storage particles (3) are stored in a second reservoir (8; 9) after said heat exchange.

18. The process as claimed in claim 17, in which the following steps are carried out:
a) storing said heat storage particles (3) in a first reservoir (7);
b) carrying out heat exchange between said particles (3) stored in said first reservoir (7) with a fluid;
c) storing said particles (3), at the outlet from the heat exchange, in a second reservoir (8);
d) carrying out heat exchange between said particles (3) stored in the second reservoir with a fluid; and
e) storing said particles (3), at the outlet from the heat exchanger, in said first reservoir (7) or in a third reservoir (9).

19. The process as claimed in claim 18, in which said heat storage particles (3) are transported from said third reservoir (9) to said first reservoir (7).

20. A compressed air energy storage and recovery process, in which the following steps are carried out:
a) compressing a gas;
b) cooling said compressed gas by heat exchange in a heat exchange system (1) as claimed in one of claims 1 to 12;
c) storing said cooled gas;
d) heating said cooled compressed gas by restoring heat to said heat exchange system (1); and
e) decompressing said heated compressed gas in order to generate energy.
